(19) Europäisches Patentamt
European Patent Office
Office européen des brevets

(11) **EP 0 425 036 B1**

(12) **EUROPEAN PATENT SPECIFICATION**

(45) Date of publication and mention
of the grant of the patent:
**25.02.1998 Bulletin 1998/09**

(51) Int Cl.6: **G06K 9/64**

(21) Application number: **90202802.6**

(22) Date of filing: **19.10.1990**

(54) **Method of matching a variable two-dimensional image of a known three-dimensional object with a desired two-dimensional image of the object**

Verfahren zum Gleichsetzen eines variablen zwei-dimensionalen Bilds eines Objekts mit einem gewünschten zweidimensionalen Bild eines bekannten dreidimensionalen Objekts

Méthode d'appariement d'une image bidimensionnelle variable d'un objet tridimensionnel connu avec une image bidimensionnelle de l'objet désirée

(84) Designated Contracting States:
**BE DE ES FR GB IT SE**

(30) Priority: **23.10.1989 NL 8902611**

(43) Date of publication of application:
**02.05.1991 Bulletin 1991/18**

(73) Proprietor: **Philips Electronics N.V.
5621 BA Eindhoven (NL)**

(72) Inventor: **Koekoek, Robert Martin,
INT. OCTROOIBUREAU B.V.
NL-5656 AA Eindhoven (NL)**

(74) Representative: **Peters, Rudolf Johannes et al
INTERNATIONAAL OCTROOIBUREAU B.V.,
Prof. Holstlaan 6
5656 AA Eindhoven (NL)**

(56) References cited:
**US-A- 4 658 428**

- **SYSTEMS COMPUTERS CONTROLS, vol. 4, no. 5, 1973, pages 8-16, Washington, US; Y. TSUBOI et al.: "Positioning and shape detection algorithms for an industrial robot"**
- **IEEE TRANSACTIONS ON PATTERN ANALYSIS AND MACHINE INTELLIGENCE, vol. PAMI-7, no. 3, May 1985, pages 338-344, IEEE, New York, US; A. GOSHTASBY: "Template matching in rotated images"**
- **IEEE TRANSACTIONS ON PATTERN ANALYSIS AND MACHINE INTELLIGENCE, vol. 10, no. 6, November 1988, pages 849-865, IEEE, New York, US; G. BORGEFORS: "Hierachical chamfer matching: A parametric edge matching algorithm"**

## Description

The invention relates to a method of matching a variable two-dimensional image of a known three-dimensional object with a desired two-dimensional image of that object by step-wise changing the variable image in the case of non-correspondence between the images.

A method of this kind is known from the publication by Radu Horaud "New Methods for Matching 3-D Objects with Single Perspective Views", IEEE Transactions on Pattern analysis and Machine Intelligence, Vol. pami-9, No. 3, May 1987.

According to the known method, a set of edges and corners representing a contour is used to match an image with different kinds of models. This method is used for determining spatial relationships between an object and a camera which is movable by means of a robot. According to the known method, small two-dimensional templates are matched with the actual image in order to extract positions of edges and corners. Subsequently, an investigation is started as to which object location could have produced this combination of corner and edges locations. Even though for two-dimensional object recognition the known method offers the advantage that the object location can still be found if the object is partly damaged, if other objects are present in the image, or if parts of the object are masked by other objects, for three-dimensional object recognition involving six degrees of freedom, a number of problems are encountered when this method is used, so that this method is rejected for the latter application.

The "observation" angle and orientation of corners of the object are not known in advance. Because a perspective projection will change the displayed corners with respect to the actual corners of the object, accurate and reliable determination of corner locations is intricate.

Corners and edges appear and disappear when the orientation of the object changes. For complex objects, for example, an object having a complex set of enclosed corners and edges such as an industrial tool used for assembly, the search process must check an enormous amount of possibilities.

Projections of curved surfaces produce complex edges. Curved surfaces will produce edges in images due to the two-dimensional projection. The assumption that edges in the image map on physical edges of the object is not valid in this case.

Noise will puzzle corner and edge detectors. Noise readily produces small variations which could be interpreted as corners. On the other hand actual corners could be overlooked due to noise. All this is due to the fact that the recognition process is only local, without surveying the overall image.

For example, when an image is out of focus due to large variations in the distance between the corner and the camera, projections of corners are rounded so that the corner detection process is impeded.

Finally, the projection may introduce fictitious corners. Notably the image of object parts situated at different distances from the camera may ensue fictitious corners.

Among other things, it is an object of the invention to provide a method for solving the described three-dimensional problem.

To achieve this, the invention is characterized in that global features in the images and/or global features of the modulo-2 subtraction of the images are used to calculate a scalar global parameter as a measure of conformance between the two images, and therefrom to determine a desired step-wise change of the variable image as being governed by motion in three dimensions in order to obtain a new variable image, until a final step brings about a sufficiently conforming match. The three-dimensional approach solves many situations, whilst the scalar parameter as a deviation indicating quantity allows a quick decision.

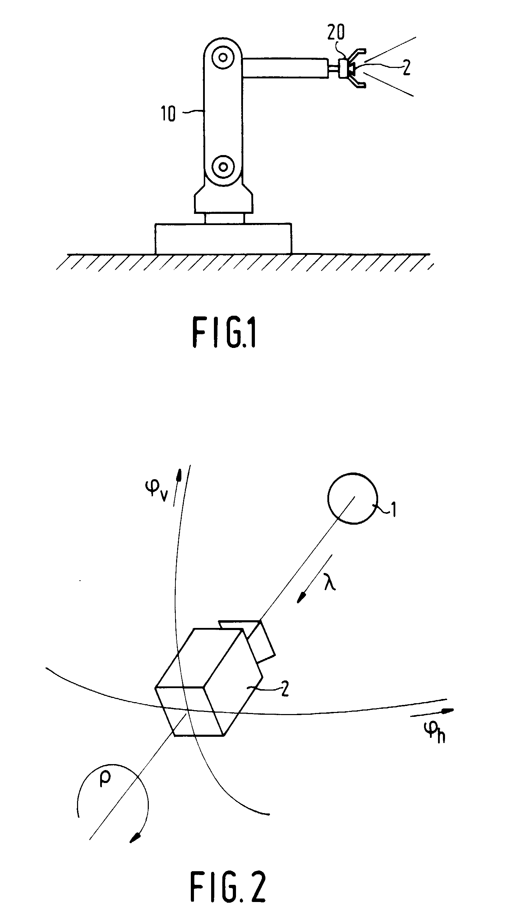

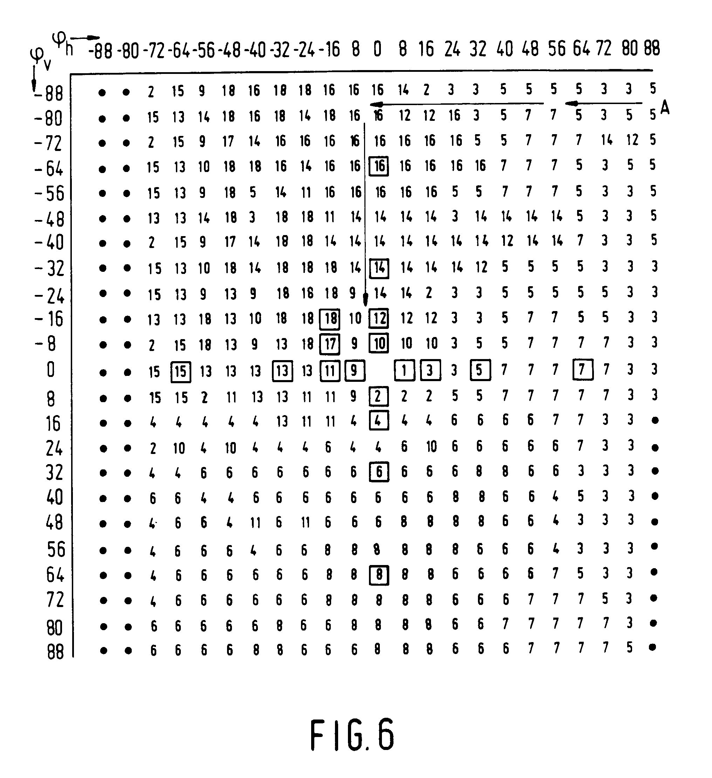

Furthermore, US Patent 4,658,428 discloses a method for frame or template generation wherein a plurality of templates of an object, depicting it in various orientations, can be generated from a single input image. On the other hand, the present invention relates to matching of a variable image with a desired image of the object. The difference between the present invention and this reference is best grasped from reading the reference's Claim 1, wherein exclusively translation and rotation of the object within the template frame are attained by detecting the centroid position of the image, and also a best-fitting ellipse therearound. Essentially, this is therefore a two-dimensional method. According to the present invention, not only position and orientation, but also the shape of the variable image are influenced in developing the matching. In this way, the method has become truly three-dimensional. The representing hereinafter of various essentials in a two-dimensional picture has been done for instructional reasons, in that it is always easier to draw in two dimensions only. Note for example, the configuration in our Figure 2 that develops a truly three-dimensional frame of operation. A further difference in the present invention is that the changes are effected stepwise, because often, after a first image change it becomes feasible to effect the matching in a more accurate manner. Note for example, the successive approximations discussed with reference to Figure 6. All types of complex objects that would be inaccessible for the known method could be positioned by the present invention. As an example, see the complex shape depicted in our Figure 5. Finally, the use of a global scalar parameter to control the continuing of the sequence of steps is an accelerating measure.

Furthermore, SYSTEMS COMPUTERS CONTROLS Vol.4, No.5, 1973, pp. 8-16, Washington, US; Y. TSUBOI et al.: 'Positioning and Shape Detection Algorithms for an Industrial Robot'. Also here, a simpler approach than according to the present invention is taken.

The method in accordance with the invention strongly deviates from the known method. For input use is made of global image features such as surfaces and centres of gravity. Because these features are only vaguely related to specific object parts, the object cannot be recognised in the sense that it is known how parts of the image relate to parts of a model. The output is formed by desirable changes of, for example, the positions of the camera with respect to the object. For a changed situation new images can be obtained as follows, depending on the intended application: using a camera which is moved by a robot in the case of robot positioning or using simulation by means of a computer program capable of producing a perspective view of a configuration of an object, observed as if it were via a camera, on the basis of the geometrical description of the object, together with its positions and orientations, the camera position and orientation and a description of the camera optical system in the case of camera location calibration or object location measurement where physical movements are not allowed.

As regards the terminology used herein it is to be noted that in the description the term "location" corresponds to "position" plus "orientation" or "translation" plus "rotation". A "model" is to be understood to mean the data describing an object.

In the case of robot positioning, if the grip of the robot comprises a camera, or more generally an image sensor, the grip can be instructed to move to a location specified with respect to a given object. This task is useful when an object is approached so as to be gripped. In the case of camera location calibration, measurement of the relation between camera and object can be used to calibrate the camera location if the location of an object and its geometry are known. In the case of object location measurement the position and rotation of a known object can be measured as from a known camera location.

The method in accordance with the invention starts with a spatial initial relation and step-wise calculates changes in order to optimise the matching of a variable image with a desirable image or reference image of the object in the desired location. It is assumed that the specified relative location has been reached when the variable image matches the desirable image.

In the case of robot positioning, the desirable image is the image of the object which is observed from the specified relative location. The variable image or projected image originates from the movable camera. In the case of camera location calibration and object location measurement, the desirable image is the image observed by the camera, the variable image being produced by said computer program which is capable of changing the virtual camera location or the virtual object location.

It is assumed that the two images match if their modulo-2 subtraction does not produce pixels of value 1 or if global features of the images correspond. If the two images deviate, an optimising program utilises their global features and/or features of their subtraction to find a relative camera-object movement which improves the correspondence of the images.

BRIEF DESCRIPTION OF THE FIGURES

The invention will be described in detail hereinafter with reference to the drawing; therein:

Fig. 1 diagrammatically shows a robot in simplified form;
Fig. 2 shows a coordinate system for describing the spatial relationship between camera and object;
Figs. 3a, b graphically show the location space and feature space, respectively, before movement of the camera;
Figs. 4a, b correspond to the Figs. 3a, b, be it after movement of the camera;
Fig. 5 shows an industrial object;
Fig. 6 is a survey of the method for feature recognition for the industrial object shown in Fig. 5. and
Fig. 7 shows a device in accordance with the invention.

A robot 10 as shown in Fig. 1 comprises a grip 20 with an image sensor 2, such as a camera, which is mounted in the grip 20.

For said optimising operation, a purely scalar minimisation algorithm can be used if the correspondence between two images can be expressed as a single number. A modulo-2 image subtraction produces the areas where the images differ. The total surface area of this subtraction can be used as input for the minimisation algorithm. The problem is thus reduced to the finding of a minimum in a six-dimensional environment of the difference in pixels for the six parameters. For the minimisation algorithm use can be made of the so-called simplex algorithm which is known from the publication by Marco S. Caceci et al "Fitting Curves to Data", Byte, May 1984, pages 340-362. A simplex is defined as the simplest geometric structure containing an N-dimensional volume. An N-dimensional simplex can be described by N+1 points, each point representing a specific relation between camera and object 1 for which the correspondence (number of different pixels) to the desired image can be evaluated. The simplex algorithm was implemented to optimise all six degrees of freedom simultaneously. The input evaluation value used was the number of different pixels between the variable and the desired image. This method offers a high accuracy, i.e. a sub-pixel accuracy, so that it is suitable for camera location calibration allowing for the use of application-specific objects. For other objects too many iterations are required; this is a direct result of the fact that a limited input is used. This is because the desired and the variable image must be compressed in one number only. Another aspect is that no geometric knowledge is used. Furthermore, minimisation methods are customarily evaluated on the basis of the number of attempts made to reach a minimum. However, when use is made of a camera 2 moved by a robot 10, an additional complication occurs in that it takes time to make a robot 10 move, notably when it is to change its direction. This implies that for the minimisation method the grip 20 of the robot in which the camera 2 is mounted will not perform a smooth movement to reach the desired location.

In Fig. 2 the origin of the fixed coordinate system is situated in the centre of the object 1. $\varphi_h$ and $\varphi_v$ denote the freedom of movement of the camera 2 in a horizontal and a vertical plane. Rotation of the camera 2 around the scanning direction is referred to as angle $\rho$, the distance between the object 1 and the camera 2 being denoted by the reference $\lambda$. Deviations from the optical axis of the camera 2 and the scanning direction towards the centre of the object 1 are referred to as $\theta_h$ and $\theta_v$. In Fig. 2, $\theta_h$ and $\theta_v$ are equal to zero and not shown.

Variations of $\varphi_h$, $\varphi_v$ and $\rho$ produce, substantially independently of the shape of the object 1, characteristic changes in the number of different pixels between the desired and the variable image. A strong relationship exists between the pick-up direction (scanning direction) of the camera 2 and the centre of gravity in its image. For small changes this is a substantially linear dependency. The area of an image is closely related to the squared inverse of the distance $\lambda$ between the camera 2 and the object 1. For small variations of $\lambda$, the deviation becomes zero. Changes in $\varphi_h$, $\varphi_v$ and $\rho$ produce a characteristic change of the surface area of the modulo-2 subtraction of the desired and the variable image, resembling the "absolute" function. Three samples which are not all situated on the same side of the minimum are required to determine the parameters. A suitable rough estimate of the minimum can then be immediately found.

The use of geometric knowledge, some examples of which have been given above and which are also referred to as global features, produced an increased convergence speed for the minimisation method. In the case of robot positioning a minimisation of $\varphi_h$, $\varphi_v$ and $\rho$ still necessitates very accurate positioning and irregular robot grip movement still occurs. As has already been stated, when a minimisation method is used, the entire image must be converted into a single value, implying an enormous loss of information which must be overcome by a trial and error strategy. The logic conclusion is to use more than one image feature. In that case, however, minimisation cannot be applied because minimisation of more than one number does not make sense. Hereinafter a method will be described which aims to match several features of the desired and the variable image.

A known object 1, having a given position and orientation (= location) causes a relevant occupation of the three-dimensional space. The camera 2 projects this on a two-dimensional surface. This image is mapped on a list of global features. If the total mapping function is unique for each point within a limited domain, an inverse function of the image exists within this area. The inverse can be found by inverting each of the three steps. These steps are known as geometric rules but are very difficult to invert explicitly. Like Fourier transformations, they combine information and distribute information, be it in a very complex and non-linear fashion. The inverse can be approximated by the explicit storage of the relations between samples in the location and feature space. In practice the sample density is limited by storage capacity, search time and time available for linking elements in the two spaces by means of a model program or by operation of the robot 10. An important improvement of this approximation of the inverse function can be achieved when it is considered that in this particular case movement in the location space is possible by means of a robot 10 or a model program and that small changes in the location space correspond to a small change of feature values.

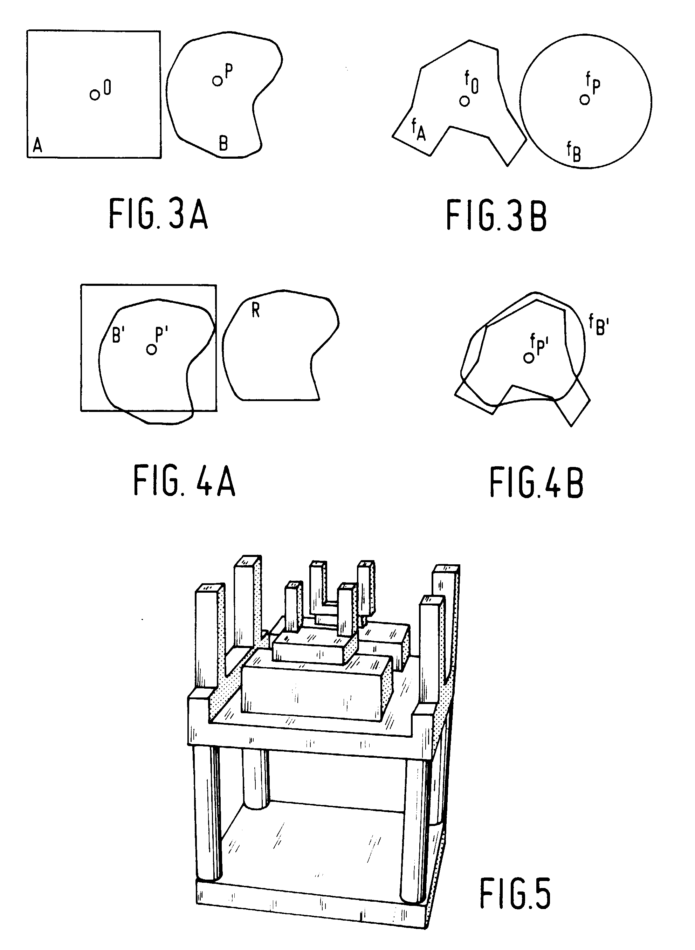

Implications of these properties will be described in detail hereinafter by way of the two-dimensional spaces graphically shown in the Figs. 3a, b and 4a, b. Points or areas in the location space (Figs. 3a, 4a) will be denoted by capital characters such as A, B etc. Their corresponding features (in Figs. 3b, 4b) are referred to as $f_A$, $f_B$, ... etc. A distance $D(f_A, f_B)$ is defined in the feature space (Figs. 3b, 4b). It expresses a degree of "proximity" which has a low value when feature values are similar. The desired relation between camera 2 and object 1 will be referred to as the origin of the space which is denoted by 0. It is assumed that for the area A in Fig. 3a, being situated around the origin 0, the location-to-feature mapping is sufficiently accurately known. For images having feature values in $f_A$ in Fig. 3b, the corresponding location in Fig. 3a is directly known. When $f_B$ describes an area in the feature space in Fig. 3b for which it can be readily detected whether points are situated therein or not, for example of the area in which the distance between the points $f_B$ is below a given threshold value, a corresponding area B can be drawn around the location P in the location space of Fig. 3a. Thus, if an observation is made within $f_B$ in Fig. 3b, the desired strategy is, for example movement of the camera 2 along the vector PO in the location space in Fig. 3a. Thus, a part of the points in B in Fig. 3a will be situated within the area A, referred to as B' in Fig. 4a, for which recognition is ensured in Fig. 4b. Therefore, the area in which the desired location will be found is increased by R at the expense of a detection in the feature space of Fig. 3b and a movement in the location space in Fig. 3a to Fig. 4a. In this case the detection requires knowledge of an additional location-feature relation between P and $f_p$ in the Figs. 3a, b. Fig. 4b shows the feature space after movement.

To be concrete, global feature recognition for two parameters will be described by way of example, i.e. $\varphi_h$, $\varphi_v$, the other location variables being optimised by geometric knowledge. The surfaces "A" and the X and Y coordinates of the centres of gravity ($C_{X,Y}$) of four quadrants having the origin in the overall centre of gravity were chosen as image features, so that:

$$\bar{A} = \begin{array}{c} A^1/100 \\ A^2/100 \\ A^3/100 \\ A^4/100 \end{array} \quad \bar{C}_x = \begin{array}{c} c_x^1 \\ c_x^2 \\ c_x^3 \\ c_x^4 \end{array} \quad \bar{C}_y = \begin{array}{c} c_y^1 \\ c_y^2 \\ c_y^3 \\ c_y^4 \end{array}$$

$$f = (\bar{A}, \bar{C}_x, \bar{C}_y)$$

where the indices 1-4 indicate the quadrant number. The four independently controlled location parameters ($\varphi_h$, $\varphi_v$, $\lambda$ and $\rho$) may still contain small errors, because their effect on the twelve features can be simply corrected. Therefore, the overall surface, the overall centre of gravity and the longest axial line can be used to scale, rotate and translate the four quadrants, so that the camera need not move and no other image is required.
$A^{tot.} = \bar{A}.(1111)$ 　　R = angle of longest axial line.

$$C_y^{tot.} = \frac{\bar{A}^T.\bar{C}_y}{A^{tot.}}$$

$$C_x^{tot.} = \frac{\bar{A}^T.\bar{C}_x}{A^{tot.}}$$

The distance calculation for features is defined as follows:

$$D(f_A, f_B) = \sum_i |f_{A_i} - f_{B_i}|$$

where i is a component index.

Fig. 6 is a survey of the behaviour of the feature recognition method for the industrial object shown in Fig. 5. Relations between the camera 2 and the object 1 have been simulated for $\varphi_h$ and $\varphi_v$ which extend from -88 to +88 degrees in intervals of eight degrees. Boxed numbers in Fig. 6 indicate positions whose global features are known in advance. The other positions exhibit a classification on the basis of the known reference point having the smallest feature distance. Subsequently, in accordance with the foregoing general explanation, for one position which is denoted by a given number the same movement is performed as would be required to move to the origin from a position bearing the same number but being boxed. Thus, from the position denoted by "A" and numbered 5, four steps to the left are made, in the same way as when from the boxed 5 a movement were made to the origin. Repeating this process, the origin is ultimately reached. This is not the case for the values of $\varphi_h$ and $\varphi_v$ which are denoted by heavy black points.

On the basis of the fact that with each image, that is to say variable image and desired image, there is associated a finite set of groups of parameters, $\varphi_h$, $\varphi_v$, $\rho$, $\lambda$, $\theta_h$ and $\theta_v$, for at least two parameters, for example $\varphi_h$ and $\varphi_v$, a number of global features, for example the surfaces and centres of gravities of four quadrants of two-dimensional images, for example black-white silhouettes, the origin of the four quadrants being the overall centre of gravity of the two-dimensional image, of variable images associated with a number of reference pairs of each time one of the parameters, for example ($\varphi_h$, $\varphi_v$) in the range (-88°+88°) (-88° - +88°) are determined in discrete steps of 8°. It is known which step-wise changes are required to obtain the desired image from the variable image associated with a reference pair. For example in Fig. 6 the desired image is obtained from the reference pair ($\varphi_v$, $\varphi_h$) = (0°, +64°) by step-wise changing the variable $\varphi_h$ from 64° to 0°. The variable images associated with all residual pairs, that is to say non-reference pairs, are compared with those associated with reference pairs and the residual pairs are classified as the respective reference pair of the variable image with which they correspond best, for example the residual pair ($\varphi_h$, $\varphi_v$) = (+48°, -80°) as the reference pair previously mentioned by way of example. Starting from a current variable image, in order to obtain a new variable image the step-wise changes are made which are necessary and known (see the exemplary values above) in order to obtain the desired image from the variable image added to the current variable image and associated with the reference pair which is the classification of the residual pair associated with the current image.

A strategy for determining useful positions of the known points is to plot a number thereof initially at exponentially increasing distances on the virtual X and Y axis in Fig. 6. Subsequently, a simulation indicates that additional points are required (in this case two), i.e. the boxed numbers 17 and 18 in addition to the boxed numbers 1-16 initially chosen.

The industrial object of Fig. 5 has a rotational symmetry of 180° so that the maximum size of the convergence areas is 90° (rotation in any arbitrary direction). In Fig.6 the nearest diverging location is situated 80° from the origin. For comparison it is to be noted that according to the minimisation method known from prior art a convergence is obtained as from 24 degrees.

According to the global image feature recognition method the robot 10 moves quickly and smoothly to its destinations. Experimental results have demonstrated that it is very well possible to calculate relative locations from global features of multiple images without accurate recognition of object parts. In the case of robot positioning, visual feedbacks and deviations in the remainder of the control loop are reduced.

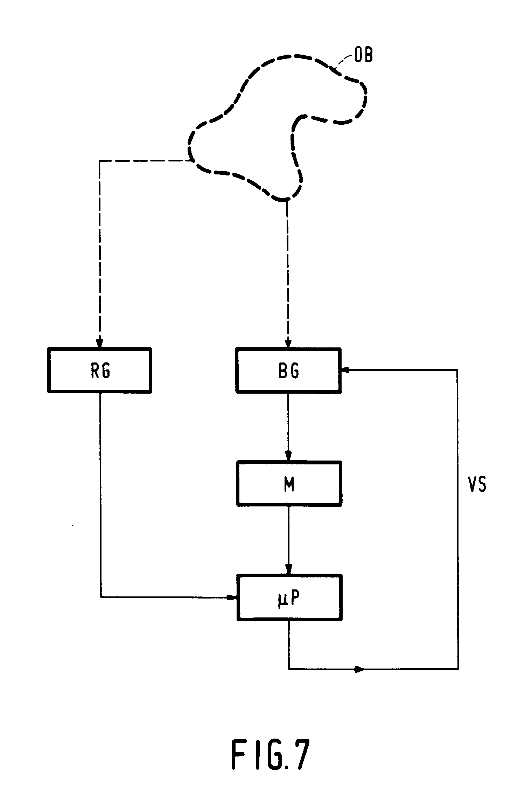

Fig. 7 shows a device in accordance with the invention. An image generator BG (for example, a camera or a computer simulating an image) generates an image of an object OB. This image is stored in a memory M, preferably a RAM (Random Access Memory). Between BG and M there could be inserted an A/D converter, but an operational amplifier and a given threshold voltage are also suitable for digitizing the image. A reference image generator RG generates a reference image of the object OB: the desired two-dimensional image. A processor μP, being connected to RG and M, determines global features of the two images and of their difference image. On the basis thereof the processor μP supplies the image generator BG with an adjustment signal VS.

In one embodiment the reference image generator RG is suitable for receiving a reference image from the image generator BG. In that case the reference generator RG is formed, for example by a RAM which stores the reference image.

## Claims

1. A method of matching a variable two-dimensional image of a known three-dimensional object with a desired two-dimensional image of that object by step-wise changing the variable image in the case of non-correspondence between the images, characterized in that global features in the images and/or global features of the modulo-2 subtraction of the images are used to calculate a scalar global parameter as a measure of conformance between the two images, and therefrom to determine a desired step-wise change of the variable image as being governed by motion in three dimensions in order to obtain a new variable image, until a final step brings about a sufficiently conforming match.

2. A method as claimed in Claim 1, characterized in that the images are binary silhouettes.

3. A method as claimed in Claim 1 or 2, characterized in that the variable image is supplied by an image sensor.

4. A method as claimed in Claim 1 or 2, characterized in that the variable image is supplied by a computer program which provides an image picked up as if it were by an image sensor.

5. A method as claimed in Claim 3, characterized in that the image sensor is accommodated in a grip which is adapted to grip the object.

6. A method as claimed in Claim 5, characterized in that a new variable image is obtained by displacement in space of the grip on the basis of the determined desired step-wise change of the variable image.

7. A method as claimed in Claim 4, characterized in that a new variable image is formed by the computer program by changing the virtual location of the image sensor or the object.

8. A method as claimed in any one of the preceding Claims, characterized in that the desired image is provided by an image sensor.

9. A method as claimed in any one of the Claims 2 to 8, characterized in that the global image features comprise a surface or centre of gravity of the silhouette.

10. A method as claimed in Claim 9, characterized in that the global image features comprise the surfaces and centres of gravity of four quadrants of the silhouette, the origin of the four quadrants being situated in the overall centre of gravity of the silhouette.

11. A method as claimed in any one of the preceding Claims, characterized in that a scalar minimisation algorithm is used to determine the step-wise change of the variable image.

12. A method as claimed in Claim 10, characterized in that the scalar minimisation algorithm is a simplex algorithm where the simplex is the simplest geometric structure containing an N-dimensional volume.

13. A method as claimed in any one of the preceding Claims, where a finite set of groups of parameters is associated with each image, characterized in that for at least two parameters there are determined a number of global features of variable images associated with a number of reference pairs of each time one of the parameters, it being known which step-wise changes are required to obtain the desired image from the variable image associated with a reference pair, the variable images associated with all remaining pairs being compared with those associated with the reference pairs, the remaining pairs respectively being classified as the reference pair of the variable image with which they correspond best, and in order to obtain a new variable image, starting from a current variable image, the step-wise changes being executed which are necessary and known to obtain the desired image from the variable image added to the current variable image and associated with the reference pair which is the classification of the remaining pair associated with the current image.

## Patentansprüche

1. Verfahren zum Anpassen eines variablen zweidimensionalen Bildes eines bekannten dreidimensionalen Objektes an ein gewünschtes zweidimensionales Bild dieses Objektes durch schrittweises Ändern des variablen Bildes bei nicht vorhandener Übereinstimmung zwischen den Bildern,
dadurch gekennzeichnet, daß globale Merkmale in den Bildern und/oder globale Merkmale der modulo-2-Subtraktion der Bilder verwendet werden, um einen skalaren globalen Parameter als Maß der Übereinstimmung der beiden Bilder zu berechnen und daraus, von einer Bewegung in drei Dimensionen geleitet, eine gewünschte schrittweise Änderung des variablen Bildes zu ermitteln, um ein neues variables Bild zu erhalten, bis ein abschließender Schritt eine genügend übereinstimmende Anpassung mit sich bringt.

2. Verfahren nach Anspruch 1, dadurch gekennzeichnet, daß die Bilder binäre Silhouetten sind.

3. Verfahren nach Anspruch 1 oder 2, dadurch gekennzeichnet, daß das variable Bild von einem Bildsensor geliefert wird.

4. Verfahren nach Anspruch 1 oder 2, dadurch gekennzeichnet, daß das variable Bild von einem Computerprogramm geliefert wird, das ein wie von einem Bildsensor aufgenommenes Bild liefert.

5. Verfahren nach Anspruch 3, dadurch gekennzeichnet, daß der Bildsensor in einem Greifer untergebracht ist, der eingerichtet ist, das Objekt zu ergreifen.

6. Verfahren nach Anspruch 5, dadurch gekennzeichnet, daß ein neues variables Bild durch räumliche Verlagerung des Greifers auf Basis der ermittelten schrittweisen Änderung des variablen Bildes erhalten wird.

7. Verfahren nach Anspruch 4, dadurch gekennzeichnet, daß von dem Computerprogramm ein neues variables Bild gebildet wird, indem der virtuelle Ort des Bildsensors oder des Objektes verändert wird.

8. Verfahren nach einem der vorhergehenden Ansprüche, dadurch gekennzeichnet, daß das gewünschte Bild von einem Bildsensor geliefert wird.

9. Verfahren nach einem der Ansprüche 2 bis 8, dadurch gekennzeichnet, daß die globalen Bildmerkmale eine Fläche oder einen Schwerpunkt der Silhouette umfassen.

10. Verfahren nach Anspruch 9, dadurch gekennzeichnet, daß die globalen Bildmerkmale die Flächen und Schwerpunkte von vier Quadranten der Silhouette umfassen, wobei der Ursprung der vier Quadranten im Gesamtschwerpunkt der Silhouette liegt.

11. Verfahren nach einem der vorhergehenden Ansprüche, dadurch gekennzeichnet, daß ein skalarer Minimierungsalgorithmus verwendet wird, um die schrittweise Änderung der variablen Bilder zu ermitteln.

12. Verfahren nach Anspruch 10, dadurch gekennzeichnet, daß der skalare Minimierungsalgorithmus ein Simplex-Algorithmus ist, wobei das Simplex die einfachste geometrische Struktur ist, die ein N-dimensionales Volumen enthält.

13. Verfahren nach einem der vorhergehenden Ansprüche, wobei zu jedem Bild eine endliche Menge von Parametergruppen gehört, dadurch gekennzeichnet, daß für zumindest zwei Parameter eine Anzahl globale Merkmale von zu einer Anzahl von Referenzpaaren von jedesmal einem der Parameter gehörenden variablen Bildern ermittelt werden, wobei es bekannt ist, welche schrittweisen Änderungen notwendig sind, um das gewünschte Bild aus dem zu einem Referenzpaar gehörenden variablen Bild zu erhalten, wobei die zu allen Restpaaren gehörenden variablen Bilder mit den zu den Referenzpaaren gehörenden verglichen werden, wobei die Restpaare jeweils als Referenzpaar des variablen Bildes klassifiziert werden, mit dem sie am besten übereinstimmen, und wobei, um ein neues variables Bild zu erhalten, ausgehend von einem aktuellen variablen Bild die schrittweisen Änderungen ausgeführt werden, die notwendig und bekannt sind, um das gewünschte Bild aus dem zu dem aktuellen variablen Bild addierten und zu dem Referenzpaar, das die Klassifikation des zu dem aktuellen Bild gehörenden Restpaares ist, gehörenden variablen Bild zu erhalten.

**Revendications**

1. Procédé de mise en correspondance d'une image bidimensionnelle variable d'un objet tridimensionnel connu avec une image bidimensionnelle souhaitée de cet objet par modifications progressives de l'image variable en cas de non-correspondance entre les images,
caractérisé en ce qu'on utilise des particularités globales des images et/ou des particularités globales de la soustraction modulo 2 pour calculer un paramètre global scalaire en tant que mesure de la conformité entre les deux images, et à partir de là, déterminer un changement progressif souhaité de l'image variable tel qu'il est dicté par un mouvement en trois dimensions de manière à obtenir une nouvelle image variable, jusqu'à ce qu'un pas final donne une correspondance suffisamment conforme.

**2.** Procédé suivant la revendication 1, caractérisé en ce que les images sont des silhouettes binaires.

**3.** Procédé suivant la revendication 1 ou 2, caractérisé en ce que l'image variable est fournie par un capteur d'images.

**4.** Procédé suivant la revendication 1 ou 2, caractérisé en ce que l'image variable est fournie par un programme informatique qui délivre une image comme si elle était saisie par un capteur d'images.

**5.** Procédé suivant la revendication 3, caractérisé en ce que le capteur d'images est logé dans une pince qui est prévue pour saisir l'objet.

**6.** Procédé suivant la revendication 5, caractérisé en ce qu'une nouvelle image variable est obtenue par le déplacement dans l'espace de la pince sur la base du changement progressif souhaité déterminé de l'image variable.

**7.** Procédé suivant la revendication 4, caractérisé en ce qu'une nouvelle image variable est formée par le programme informatique en changeant l'emplacement virtuel du capteur d'images ou de l'objet.

**8.** Procédé suivant l'une quelconque des revendications précédentes, caractérisé en ce que l'image souhaitée est fournie par un capteur d'images.

**9.** Procédé suivant l'une quelconque des revendications 2 à 8, caractérisé en ce que les particularités globales de l'image comprennent une surface ou un centre de gravité de la silhouette.

**10.** Procédé suivant la revendication 9, caractérisé en ce que les particularités globales de l'image comprennent les surfaces et centres de gravité de quatre quadrants de la silhouette, l'origine des quatre quadrants se trouvant au centre de gravité de l'ensemble de la silhouette.

**11.** Procédé suivant l'une quelconque des revendications précédentes, caractérisé en ce qu'un algorithme de minimisation scalaire est utilisé pour déterminer le changement progressif de l'image variable.

**12.** Procédé suivant la revendication 10, caractérisé en ce que l'algorithme de minimisation scalaire est un algorithme de simplexe, où le simplexe est la structure géométrique la plus simple contenant un volume à N dimensions.

**13.** Procédé suivant l'une quelconque des revendications précédentes, dans lequel un jeu fini de groupes de paramètres est associé à chaque image, caractérisé en ce que pour au moins deux paramètres, on détermine un certain nombre de particularités globales d'images variables associées à un certain nombre de paires de référence de chaque fois un des paramètres, sachant que sont connus les changements progressifs qui sont requis pour obtenir l'image souhaitée à partir de l'image variable associée à une paire de référence, les images variables associées à toutes les paires restantes étant comparées à celles associées aux paires de référence, les paires restantes étant respectivement classées comme la paire de référence de l'image variable à laquelle elles correspondent le mieux, et de manière à obtenir une nouvelle image variable, à partir d'une image variable courante, les changements progressifs qui sont nécessaires et connus pour obtenir l'image souhaitée à partir de l'image variable ajoutée à l'image variable courante et associée à la paire de référence qui est la classification de la paire restante associée à l'image courante étant exécutés.

FIG.1

FIG. 2

FIG. 3A

FIG. 3B

FIG. 4A

FIG. 4B

FIG. 5

| φv \ φh | -88 | -80 | -72 | -64 | -56 | -48 | -40 | -32 | -24 | -16 | 8 | 0 | 8 | 16 | 24 | 32 | 40 | 48 | 56 | 64 | 72 | 80 | 88 |
|---|---|---|---|---|---|---|---|---|---|---|---|---|---|---|---|---|---|---|---|---|---|---|---|
| -88 | • | • | 2 | 15 | 9 | 18 | 16 | 18 | 18 | 16 | 16 | 16 | 14 | 2 | 3 | 3 | 5 | 5 | 5 | 5 | 3 | 3 | 5 |
| -80 | • | • | 15 | 13 | 14 | 18 | 16 | 18 | 14 | 18 | 16 | 16 | 12 | 12 | 16 | 3 | 5 | 7 | 7 | 5 | 3 | 5 | 5 A |
| -72 | • | • | 2 | 15 | 9 | 17 | 14 | 16 | 16 | 16 | 16 | 16 | 16 | 16 | 16 | 5 | 5 | 7 | 7 | 7 | 14 | 12 | 5 |
| -64 | • | • | 15 | 13 | 10 | 18 | 18 | 16 | 14 | 16 | 16 | [16] | 16 | 16 | 16 | 16 | 7 | 7 | 7 | 5 | 3 | 5 | 5 |
| -56 | • | • | 15 | 13 | 9 | 18 | 5 | 14 | 11 | 16 | 16 | 16 | 16 | 16 | 5 | 5 | 7 | 7 | 7 | 5 | 3 | 3 | 5 |
| -48 | • | • | 13 | 13 | 14 | 18 | 3 | 18 | 18 | 11 | 14 | 14 | 14 | 14 | 3 | 14 | 14 | 14 | 14 | 5 | 3 | 3 | 5 |
| -40 | • | • | 2 | 15 | 9 | 17 | 14 | 18 | 18 | 14 | 14 | 14 | 14 | 14 | 14 | 14 | 12 | 14 | 14 | 7 | 3 | 3 | 5 |
| -32 | • | • | 15 | 13 | 10 | 18 | 14 | 18 | 18 | 18 | 14 | [14] | 14 | 14 | 14 | 12 | 5 | 5 | 5 | 5 | 3 | 3 | 3 |
| -24 | • | • | 15 | 13 | 9 | 13 | 9 | 18 | 16 | 18 | 9 | 14 | 14 | 2 | 3 | 3 | 5 | 5 | 5 | 5 | 5 | 3 | 3 |
| -16 | • | • | 13 | 13 | 18 | 13 | 10 | 18 | 18 | [18] | 10 | [12] | 12 | 12 | 3 | 3 | 5 | 7 | 7 | 5 | 5 | 3 | 3 |
| -8 | • | • | 2 | 15 | 18 | 13 | 9 | 13 | 18 | [17] | 9 | [10] | 10 | 10 | 3 | 5 | 5 | 7 | 7 | 7 | 7 | 3 | 3 |
| 0 | • | • | 15 | [15] | 13 | 13 | 13 | [13] | 13 | [11] | [9] | | [1] | [3] | 3 | [5] | 7 | 7 | 7 | [7] | 7 | 3 | 3 |
| 8 | • | • | 15 | 15 | 2 | 11 | 13 | 13 | 11 | 11 | 9 | [2] | 2 | 2 | 5 | 5 | 7 | 7 | 7 | 7 | 7 | 3 | 3 |
| 16 | • | • | 4 | 4 | 4 | 4 | 4 | 13 | 11 | 11 | 4 | [4] | 4 | 4 | 6 | 6 | 6 | 6 | 7 | 7 | 3 | 3 | • |
| 24 | • | • | 2 | 10 | 4 | 10 | 4 | 4 | 4 | 6 | 4 | 4 | 6 | 10 | 6 | 6 | 6 | 6 | 6 | 7 | 3 | 3 | • |
| 32 | • | • | 4 | 4 | 6 | 6 | 6 | 6 | 6 | 6 | 6 | [6] | 6 | 6 | 6 | 8 | 8 | 6 | 6 | 3 | 3 | 3 | • |
| 40 | • | • | 6 | 6 | 4 | 4 | 6 | 6 | 6 | 6 | 6 | 6 | 6 | 6 | 8 | 8 | 6 | 6 | 4 | 5 | 3 | 3 | • |
| 48 | • | • | 4 | 6 | 6 | 4 | 11 | 6 | 11 | 6 | 6 | 6 | 8 | 8 | 8 | 8 | 6 | 6 | 4 | 3 | 3 | • |
| 56 | • | • | 4 | 6 | 6 | 6 | 4 | 6 | 6 | 8 | 8 | 8 | 8 | 8 | 8 | 6 | 6 | 6 | 4 | 3 | 3 | • |
| 64 | • | • | 4 | 6 | 6 | 6 | 6 | 6 | 6 | 8 | 8 | [8] | 8 | 8 | 6 | 6 | 6 | 6 | 7 | 5 | 3 | 3 | • |
| 72 | • | • | 4 | 6 | 6 | 6 | 6 | 6 | 6 | 8 | 8 | 8 | 8 | 8 | 6 | 6 | 6 | 7 | 7 | 7 | 5 | 3 | • |
| 80 | • | • | 6 | 6 | 6 | 6 | 6 | 8 | 6 | 6 | 8 | 8 | 8 | 8 | 6 | 6 | 7 | 7 | 7 | 7 | 7 | 3 | • |
| 88 | • | • | 6 | 6 | 6 | 6 | 8 | 8 | 6 | 6 | 6 | 8 | 8 | 8 | 6 | 6 | 6 | 7 | 7 | 7 | 7 | 5 | • |

FIG. 6

OB

RG

BG

M

VS

μP

# FIG.7